# EUROPEAN PATENT APPLICATION

(11) **EP 3 537 341 A1**
(43) Date of publication of application: **11.09.2019**
(21) Application number: 19157649.5
(22) Date of filing: 18.02.2019
(51) Int. Cl.: G06K 9/03, G06K 9/68, G06K 9/22, G06K 9/72, G06F 3/0488, G06K 9/62

(54) **CHARACTER INPUT DEVICE, CHARACTER INPUT METHOD, AND CHARACTER INPUT PROGRAM**

(30) Priority: 05.03.2018 JP 2018038507
(71) Applicant: OMRON Corporation, Shiokoji-dori, Shimogyo-Ku Kyoto-shi Kyoto 600-8530 (JP)
(72) Inventor: Ichikawa, Kei, Kyoto-shi, Kyoto 604-8152 (JP); Ueda, Masaharu, Kyoto-shi, Kyoto 604-8152 (JP)
(74) Representative: Kilian Kilian & Partner

(57) **Abstract**

Efficient handwriting input is performed. A character input device (10,10A) includes: a handwritten character input unit (120) that receives a handwritten character input operation; a controller (200) that outputs a prediction candidate in which a replacement character is replaced, the prediction candidate corresponding to a series of handwritten characters, when the replacement character exists in the series of handwritten characters input to the handwritten character input unit; and a candidate display (410) that displays the prediction candidate.

## Description

### FIELD

The present invention relates to a character input technique for a touch panel type input device.

### BACKGROUND

In the configurations described in WO 2014/147712 and WO 2016/181565, handwriting input is performed using the touch panel type input device.

However, in the configurations of WO 2014/147712 and WO 2016/181565, it is assumed that a user previously knows the character that the user wants to input. That is, when the user cannot remember the character that wants to input or does not know the character, there is a possibility that character input cannot be performed.

### SUMMARY

Thus, an object of the present invention is to perform efficient handwriting input.

According to one aspect of the present invention, a character input device includes: a handwritten character input unit that receives a handwritten character input operation; a controller that outputs a prediction candidate in which a replacement character is replaced, the prediction candidate corresponding to a series of handwritten characters, when the replacement character exists in the series of handwritten characters input to the handwritten character input unit; and a candidate display that displays the prediction candidate.

With this configuration, in performing the handwriting input, the prediction candidate can be output by replacing the replacement character with another character, and convenience of the user is improved.

The controller of the character input device may search the prediction candidate such that a vocabulary is established, the prediction candidate corresponding to the series of handwritten characters.

With this configuration, the prediction candidates including a context of the replacement character can be output.

The controller of the character input device may presume the handwritten character based on an input locus of the handwritten character.

With this configuration, the prediction candidate can be presumed using the input locus describing a part of the handwritten character.

The controller of the character input device may display the plurality of prediction candidates that relevant to the handwritten character when the plurality of prediction candidates presumed from the handwritten character exist.

With this configuration, the prediction candidate can be output in descending order of the relevance.

The character input device may further include a storage in which the replacement character which is arbitrarily set can be stored.

With this configuration, customization can be performed in each user, and convenience is improved.

According to the present invention, the efficient handwriting input can be performed.

### BRIEF DESCRIPTION OF THE DRAWINGS

Fig. 1 is a block diagram illustrating a character input device according to a first embodiment of the present invention.
Fig. 2 is a schematic diagram illustrating the character input device of the first embodiment of the present invention.
Fig. 3 is a flowchart illustrating operation of the character input device of the first embodiment of the present invention.
Fig. 4 is a schematic diagram illustrating a character input device according to a second embodiment of the present invention.

### DETAILED DESCRIPTION

Hereinafter, modes for carrying out the present invention will be described with reference to the drawings.

### • Application example

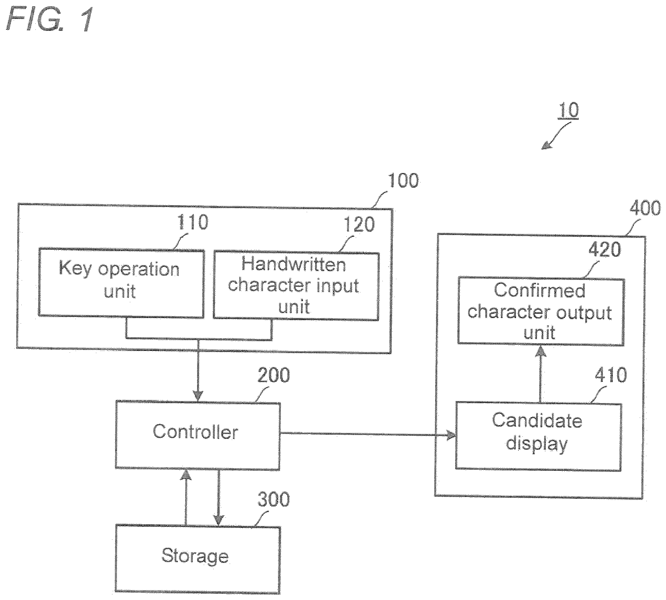

An example to which the present invention is applied will be described first with reference to Fig. 1. Fig. 1 is a block diagram illustrating a character input device according to a first embodiment of the present invention. For example, the character input device 10 is a smartphone, and is used in a device that can input a character by operating a touch screen type display screen included in a mobile communication terminal or the like.

The character input device 10 includes an operation unit 100, a controller 200, a storage 300, and an output unit 400. The operation unit 100 includes a key operation unit 110 and a handwritten character input unit 120. The output unit 400 includes a candidate display 410 and a confirmed character output unit 420. For example, the storage unit 300 has dictionary data and data such as a user's input history. The candidate display 410 displays a normal candidate (hereinafter, referred to as a normal candidate) that can be searched from the dictionary data and a prediction candidate (hereinafter, referred to as a prediction candidate) presumed from the handwritten character.

A user activates the handwritten character input unit 120 using the key operation unit 110. The user performs handwriting input using the handwritten character input unit 120.

At this point, a character string input by handwriting (hereinafter, handwritten characters) includes a replacement character. For example, the replacement character is a symbol such as "○". and has a role of a wild card. Specifically, the user replaces the character that cannot be recalled or unknown with "○", and performs the handwriting input.

The handwritten character input unit 120 outputs the handwritten characters to the controller 200. The controller 200 determines whether the handwritten characters include a replacement character. When determining that the handwritten characters include the replacement character, the controller 200 searches the prediction candidate presumed from the storage 300 by replacing "○" with another character. Subsequently, in consideration of a search result of the prediction candidate, the controller 200 searches the normal candidate such that a vocabulary is established. At this point, the controller 200 may determine that "o" is " 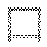 (kanji character)" or" 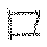 (katakana character)".

The controller 200 outputs the prediction candidate and the normal candidate to the candidate display 410. When the user selects a corresponding character string from the candidate display 410, the candidate display 410 outputs the corresponding character string to the confirmed character output unit 420. Any display order of the prediction candidate and the normal candidate may be set by the user.

With this configuration, even if the user cannot remember the character that the user wants to input, the prediction candidate can be output from the handwritten characters. The replacement character is determined to be a normal handwritten input character, and the normal candidate can be output. That is, the user can efficiently input the handwritten character, and convenience of the user is improved.

### • Configuration Example 1

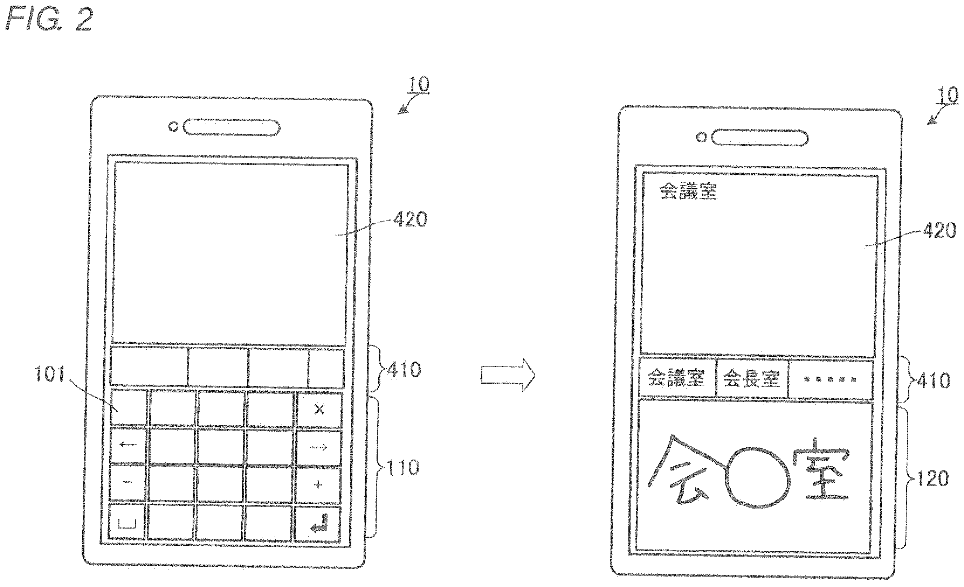

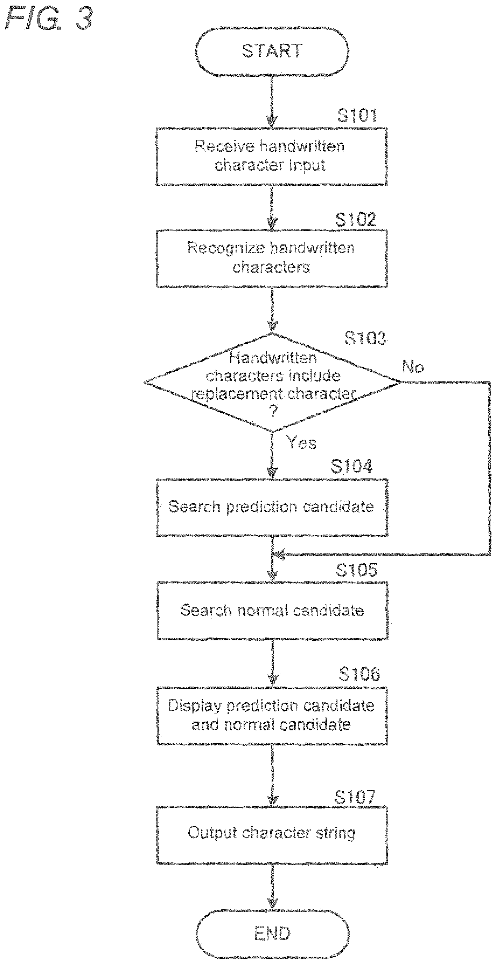

Fig. 1 is a block diagram illustrating a character input device according to a first embodiment of the present invention. Fig. 2 is a schematic diagram illustrating the character input device of the first embodiment of the present invention. Fig. 3 is a flowchart illustrating operation of the character input device of the first embodiment of the present invention.

Based on a configuration of the character input device 10 in Fig. 1, a more specific configuration example will be described with reference to Fig. 2.

As illustrated in Figs. 1 and 2, the character input device 10 includes the key operation unit 110, the candidate display 410, and the confirmed character output unit 420. The key operation unit 110 includes a handwritten character switching button 101. When the user presses this handwritten character switching button 101, the operation unit 100 switches between the key operation unit 110 and the handwritten character input unit 120.

When the user presses the handwritten character switching button 101, the operation unit 100 activates the handwritten character input unit 120. The user inputs " 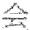 ", "o", " 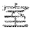 " to the handwritten character input unit 120.

The handwritten character input unit 120 outputs the character string of " 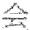 ", "o", " 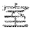 " to the controller 200. The controller 200 detects each of the handwritten characters, and detects that "o" that is a replacement character is input.

The controller 200 searches the character string relating to " 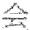 " o 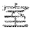 with "o" as a wild card from the storage 300. As a result, the controller 200 outputs the search result such as " 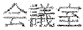 " and " 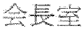 " to the candidate display 410. When the user selects " 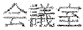 ", the controller 200 can output the desired character string " 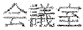 " to the confirmed character output unit 420.

A specific operation when the handwriting input is performed using the replacement character will be described with reference to Fig. 3. Fig. 3 is a flowchart illustrating operation of the character input device of the first embodiment of the present invention..

The handwritten character input unit 120 receives a handwritten character input operation (S101).

The controller 200 recognizes the handwritten characters (S102).

The controller 200 determines whether the handwritten characters include the replacement character (S103).

When the handwritten characters include the replacement character (Yes in S103), the controller 200 searches the prediction candidate from the storage 300 (S104).

The controller 200 searches the normal candidate such that the vocabulary is established in consideration of the search result of the prediction candidate, and the controller 200 outputs the normal candidate to the candidate display 410 (S105).

The candidate display 410 displays the prediction candidate and the normal candidate (S106).

When the user selects the corresponding character string from the prediction candidate, the candidate display 410 outputs the character string to the confirmed character output unit 420 (S107).

When the handwritten characters do not include the replacement character (No in S103), the controller 200 searches the normal candidate from the storage 300, and outputs the normal candidate to the candidate display 410 (S105).

The candidate display 410 displays the normal candidate (S106).

When the user selects the corresponding character string from the normal candidate, the candidate display 410 outputs the corresponding character string to the confirmed character output unit 420 (S107).

With this configuration, in the case that the character string includes the replacement character, the storage 300 can be searched with the replacement character as a wild card. That is, the prediction candidate can be searched, and the character string desired by the user can be output.

In the above example, one replacement character is included in the character string. However, similar processing can be performed even if a plurality of replacement characters are included in the character string.

When the handwriting input is performed on the character having a large number of strokes, complication of the handwriting input is eliminated by inputting the character having a large number of strokes with the replacement character, and the user can perform the efficient character input. At this point, the presumption may be performed from the character input using an input trace during the handwriting input.

The replacement character can be customized by the user, and the customized replacement character can be stored in the storage 300. The convenience of the user is further improved.

### • Configuration Example 2

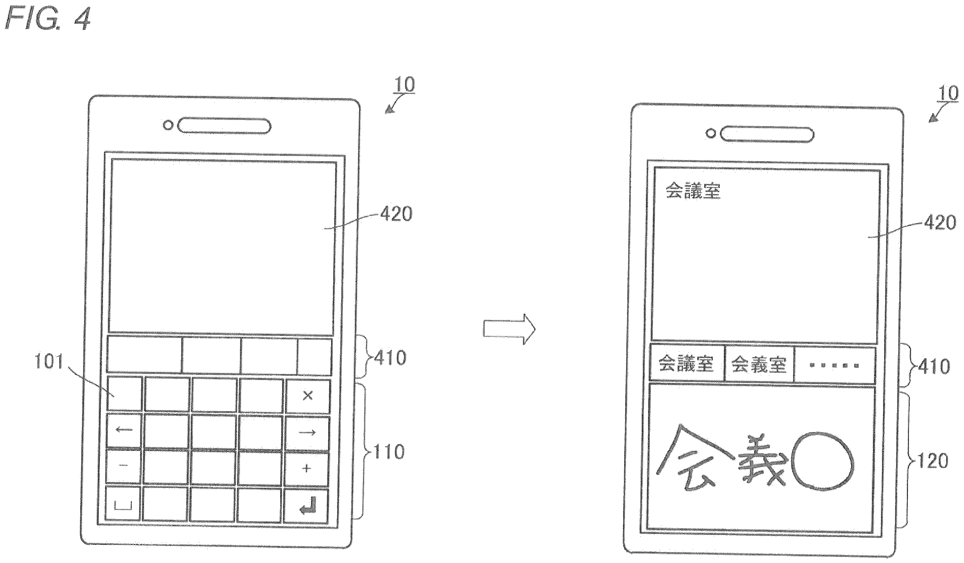

A specific configuration of a character input device 10A will be described below with reference to Fig. 4. Fig. 4 is a schematic diagram illustrating a character input device according to a second embodiment of the present invention.

The second embodiment is different from the first embodiment in that the second embodiment has a function of correcting erroneous input. The other points are similar to those of the first embodiment, and the description of the same portions will be omitted.

As illustrated in Fig. 4, when the user presses the handwritten character switching button 101, the operation unit 100 activates the handwritten character input unit 120. The user inputs " 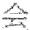 ", " 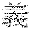 ", "o" to the handwritten character input unit 120. At this point, the user erroneously inputs " 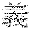 " when entering " 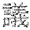 ".

The handwritten character input unit 120 outputs character strings of " 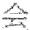 ", " 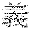 ", "o" to the controller 200. The controller 200 detects that "o" that is the replacement character is input.

The controller 200 searches the character string relating to " 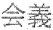 o" with "o" as the wild card from the storage 300. At this point, the controller 200 searches the character string having high relevancy with the character string input by the user in the past or the dictionary data.

Consequently, the controller 200 outputs search results such as "3 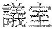 ", " 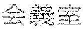 ", " 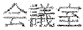 ", and the like to the candidate display 410. When the user selects " 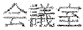 ", the candidate display 410 can output the character string " 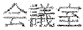 " to the confirmed character output unit 420.

Even in this configuration, in the case that the character string includes the replacement character, the prediction candidate presumed from the storage 300 can be searched such that the vocabulary is established by replacing the replacement character with another character.

Even in the case that the erroneous input is corrected, the prediction candidate can be presumed from the dictionary data and the user's input history, so that the character input can efficiently be performed according to a user's need.

In the above example, the replacement character is input by handwriting. Alternatively, a button that inputs the replacement character may be provided in addition to the handwriting input.

## Claims

1. A character input device (10, 10A) comprising:
a handwritten character input unit (120) that receives a handwritten character input operation;
a controller (200) that outputs a prediction candidate in which a replacement character is replaced, the prediction candidate corresponding to a series of handwritten characters, when the replacement character exists in the series of handwritten characters input to the handwritten character input unit (120); and
a candidate display (410) that displays the prediction candidate.

2. The character input device (10, 10A) according to claim 1, wherein the controller (200) searches the prediction candidate such that a vocabulary is established, the prediction candidate corresponding to the series of handwritten characters.

3. The character input device (10, 10A) according to claim 1 or 2, wherein the controller (200) presumes the handwritten character based on an input locus of the handwritten character.

4. The character input device (10, 10A) according to any one of claims 1 to 3, wherein the controller (200) displays a plurality of the prediction candidates that relevant to the handwritten character when the plurality of prediction candidates presumed from the handwritten character exist.

5. The character input device (10, 10A) according to claim 1, further comprising a storage (300) in which the replacement character which is arbitrarily set can be stored.

6. A character input method executed by a computer, the character input method comprising the steps of:
receiving a handwritten character input operation (S101);
presuming a prediction candidate in which a replacement character is replaced, the prediction candidate corresponding to a series of handwritten characters, when the replacement character exists in the series of handwritten characters (S104); and
displaying the prediction candidate (S106).

7. A character input program causing a computer to execute the steps of:
receiving a handwritten character input operation (S101);
presuming a prediction candidate in which a replacement character is replaced, the prediction candidate corresponding to a series of handwritten characters, when the replacement character exists in the series of handwritten characters (S104); and
displaying the prediction candidate (S106).
